Europäisches Patentamt

European Patent Office

Office européen des brevets

(19)

(11) Publication number: **0 140 701**
A2

(12) **EUROPEAN PATENT APPLICATION**

(21) Application number: **84307456.8**

(22) Date of filing: **29.10.84**

(51) Int. Cl.⁴: **A 01 C 7/04**

---

(30) Priority: **31.10.83 US 546834**

(71) Applicant: **DEERE & COMPANY, 1 John Deere Road, Moline Illinois 61265 (US)**

(72) Inventor: **Lundie, William Robert, 3645 - 8th Street, East Moline Illinois 61244 (US)**
Inventor: **Martin, James Carlson, 1809 East 31st Street, Davenport Iowa 52807 (US)**
Inventor: **Tetrick, James Loren, 121 Park Lane Circle, Eldridge Iowa 52748 (US)**

(43) Date of publication of application: **08.05.85**
**Bulletin 85/19**

(74) Representative: **Pears, David Ashley et al, REDDIE & GROSE 16 Theobalds Road, London WC1X 8PL (GB)**

(84) Designated Contracting States: **DE FR GB**

---

(54) **Vacuum seed meter.**

(57) A cylindrical housing is divided by a rotating disk 48 into a vacuum chamber and a seed chamber. The disk has a circumferential row of apertures and, as it rotates, individual seeds are held onto the apertures by virtue of the vacuum on the opposite side of the disk 48. Over one sector of the disk the vacuum is not applied by virtue of a suitably shaped partition. On the feed chamber side, a barrier 88 partitions the seed reservoir 76 from a discharge chute 44. Because the vacuum is interrupted, the seeds 150 drop off the disk and down the chute. In order to promote reliable picking up of single seeds only, each aperture opens into a tear drop shaped recess forming a seed cell 144. Adjacent each cell there is an agitating fin 146 on the disk 48. The barrier 88 comprises a brush wiping against the disk, except at the top where the loaded seed cells 144 pass over towards the chute 44.

0140701

## VACUUM SEED METER

The present invention relates to a seed meter comprising a housing divided into a seed chamber and a vacuum chamber by a rotatable disk with a circumferential row of through apertures for picking up seeds under the influence of reduced pressure in the vacuum chamber, a sector of the disk being partitioned off both from the vacuum chamber and from the seed chamber so as to allow seeds to drop off the disk to a discharge chute.

Such a seed meter is described in US 3 608 787. Seed meters of various designs have been employed to dispense seeds at a controlled rate into a seed furrow as the seed meter is advanced along the furrow. In a typical arrangement a tractor is coupled to a tool bar to which are attached in generally parallel, spaced apart relation a plurality of planting units with seed meter arrangements attached thereto. Each of the planting units includes a seed hopper for containing a quantity of the seed to be planted, a device for opening a furrow as the tractor-drawn tool bar is advanced over the ground, a seed meter coupled to the seed hopper for dispensing individual seeds into the furrow at a controlled rate and a further device for moving soil at the sides of the furrow to close the furrow over the seeds. The planting unit may further include containers for insecticide and fertilizer together with apparatus for dispensing controlled amounts of each.

Planting arrangements of the type described typically have apparatus including rotatable wheels in contact with the ground or other distance monitoring devices for controlling the rate of discharge of seeds from the seed meter that so the proper seed spacing is achieved. The tractor typically moves across the ground at a speed of 6-13 km per hour. The spacing between individual seeds in each furrow can range from as little as 1.5cm or less to as much as 40cm . or more depending upon the type of seeds being planted. The seed meters must accordingly be capable of dispensing seeds at a very high rate around 200 seeds per second or greater as well as at rates which are considerably lower. The many different types of seeds which are typically planted in this fashion include maize, cotton, sorghum, sugar beets, soy beans and sunflower. Such seeds vary considerably in both size and shape. For example, maize seeds are among the largest and have an irregular surface. Soy bean, cotton and sunflower seeds are slightly smaller and tend to be rounded, elongated and very elongated in shape, respectively. Sorghum and sugar beet seeds are still smaller and generally spherical, the former having a relatively smooth outer surface and the latter having a very rough and irregular outer surface. Despite such differences in size and shape, seed meters are expected or required to handle two or more or even all of the different types of seeds described with a minimum of part changes and adjustments. At the same time required standards of planting accuracy typically require a low error rate. A missed seed or a doubling of seeds is undesirable and may be allowed only very infrequently. Such requirements place considerable demands upon the accuracy of the seed meters.

Some seed meters used in planting arrangements of the type discussed are of the mechanical type in which mechanically actuated fingers or similar mechanical devices are typically used to separate individual seeds from a seed mass and then dispense them into the furrow. While mechanical seed meters are satisfactory for certain applications, they typically suffer from a number of limitations which include a limitation in the speed at which they can accurately dispense seeds, an inability to handle different types of seeds without making cumbersome and extensive part changes, and an inherent design complexity which may typically add to the cost, wear and maintenance problems of the seed meters.

An alternative type of seed meter which uses an air pressure differential has been developed in an effort to overcome some of the problems of mechanical seed meters. Air pressure differential seed meters, which are commonly known as air seed meters are generally of two types, the first being the positive pressure type and the second being the vacuum type.

In the positive pressure type of air seed meter, air is blown into the seed chamber and onto the surface of a rotating or otherwise movable member in order to create a higher than atmospheric pressure in the chamber. This forces seeds from a seed mass onto the member where they are retained held for later release. The rotating member is typically provided with apertures open to atmosphere where the individual seeds are held by the blowing air until the seeds are dispensed by interrupting the flow of air to the seeds.

Examples of positive pressure type air seed meters are provided by U. S. Patents 3,888,387 of Deckler, 4,047,638 of Harrer and 4,074,830 of Adams. In the Deckler patent pressure is applied to a disk having irregularly shaped pockets for the seeds and radial passages for air flow. A separate pressure gate is employed to help eliminate excess seeds and to discharge the seeds from the disk. In the Harrer patent pressure is applied to a disk having clamshell-shaped pockets in which the individual seeds are held by the pressure differential until discharge by passage of the disk through a region that is isolated from the pressurized air. In the Adams patent pressurized air is also applied to a disk having seed-carrying pockets. Once the seed is in the pocket, the pockets contact a flat sealing surface to hold the seeds in the pockets until discharge is desired. Still other patents which relate to this type of arrangement include U. S. Patent 3,999,690 of Deckler which describes a stainless steel wear plate driven by the metering disk and which is wear resistant, and U. S. Patent 4,091,964 of Harrer which describes in further detail a sealing pad for use in the arrangement of the Adams patent.

While air seed meters of the positive pressure type offer certain advantages over mechanical seed meters, they have certain limitations of their own which may prove to be a significant disadvantage for various applications. Because the seeds are held in place on the rotating disk or other movable member by differential pressure resulting from positive pressure in the chamber, it is usually necessary that the air flow be directed through the seed mass to aid in the depositing of individual seeds on the disk. The air flow has been found to interfere with the orderly delivery of seeds down to the disk, so that even a very high pressure differential will not necessarily guarantee the avoidance of seed doubles or voids at the various apertures in the disk. In positive pressure systems, the seed hopper must be sealed to maintain pressure. If for any reason the hopper lid comes off or the hopper otherwise becomes unsealed, the seed meter will not function.

Vacuum seed meters have been found to overcome some of the problems in the positive pressure seed meters. In vacuum seed meters a vacuum source is typically coupled to a separate chamber on the opposite side of a seed disk from the seed mass with the vacuum communicating through the apertures in the seed disk to the seed mass. Because the pressure differential at the seed disk comes from a vacuum source on the opposite side thereof and not from a flow of air at the same side thereof as in the case of the positive pressure type of seed meter, the problems of having to direct an air flow through the seed mass and onto the seed disk are eliminated.

Despite the various advantages of vacuum seed meters over meters of the positive pressure type, presently known vacuum seed meters are not without problems of their own. For one thing a relatively high power vacuum source is typically required to provide the large pressure differential needed in order to accelerate the seeds to the speed of the rotating seed disk and thereafter hold the seeds on the disk at the apertures in the disk. Because of the difficulty in accelerating the seeds from the mass to the speed of the seed disk for adherence thereto, various mechanical agitating arrangements are sometimes used at the expense of increased complexity in the construction and operation of the seed meter. A further problem which is aggravated when a large pressure differential is present is that of excess seeds being picked up on the seed disk. Because of this tendency, many vacuum seed meters must be equipped with multiple seed eliminating devices or arrangements to insure that only one seed remains at each aperture in the seed disk as the disk reaches the seed discharge and delivery area. Multiple seed eliminating devices must be adjusted from meter to meter across the planter, thereby increasing operator start-up time. A large pressure differential also creates problems in releasing the seeds from the disk and frequently requires the use of seed ejectors or other devices which complicate the design and operation of the seed meter.

A typical example of a conventional vacuum seed meter is provided by U. S. Patent 3,608,787 of Grataloup. The arrangement shown in this patent which includes a perforated seed disk and a vacuum source requires a special plate containing hollows and projections engaging the seed disk to eliminate multiple seeds. In U. S. Patent 3,990,606 of Gugenhan, a drum has a seed plate attached thereto on which seeds are held by vacuum. The arrangement shown therein requires an interruptor device to close each hole at the discharge position while a seed ejecter device engages the outer surface of the plate. German Patent No. 25 17 758 describes a vacuum seed meter which includes an apertured disk and a distributor wheel with a ring of scoops thereon. French Patent No. 2 376 607 shows a vacuum system having a rotating plate with pockets for selecting potato tubers, one by one.

An example of an earlier and somewhat different design of a vacuum meter is provided by US Patent 3,533,535 of Knapp. In the Knapp patent vacuum is used to hold seeds or other objects within clamshell shaped cells communicating with holes in a rotating drum. The surface of the drum which is comprised of elastomeric material is distorted by spring-loaded plungers which project into the holes in the drum to flatten the cells and aid in seed ejection. US Patent No 3,434,437 of Mark et al is exemplary of a separate accelerating mechanism for accelerating seeds from a seed mass to the speed of the seed drum. Likewise, in US Patent 2,991,909 of Lamazow a paddled stirrer is employed to agitate the seeds.

Accordingly, it is an object of this invention to provide a vacuum seed meter requiring a relatively small pressure differential and in which seeds are readily accelerated to the speed of and picked up by the seed disk in the presence of the relatively small air pressure differential, without the need for separate seed agitating and accelerating mechanism. It is a further object to provide a vacuum seed meter in which the problem of seed doubling or the picking up of excess seeds in minimized and in which seeds held to a seed disk by vacuum are readily and reliably released from the seed disk without the need for complicated release mechanisms.

The invention is characterised in that, on the side of the disk facing the seed chamber, each through aperture opens into a recess forming a seed cell and promoting the retention of single seeds at each aperture under the influence of the reduced pressure in the vacuum chamber.

The use of a relatively low power vacuum source and the resulting low pressure differential are made possible, at least in part, by the seed cell configuration in the rotating seed metering disk. The seed cell configuration acts either alone or in combination with fins on the surface of the disk to provide sufficient agitation and mechanical acceleration of seeds in the seed mass so that the seeds are picked up by and held within the cells by the relatively low pressure differential from the vacuum source. At the same time the seed cells are configured so as to greatly minimize the problem of doubling or other unwanted aggregation of plural seeds at any one cell. The seeds carried by the seed disk are readily and reliably released for discharge from the seed meter by simply preventing communication of the vacuum source with a portion of the seed disk.

In a preferred embodiment of a vacuum seed meter in accordance with the invention a seed metering disk rotatably mounted within the hollow interior of a generally cylindrical housing divides the housing into first and second chambers adjacent the opposite first and second sides respectively of the seed disk. Seeds from a hopper mounted above and adjacent the seed meter flow through entry chutes at the back of the generally cylindrical housing to a first or seed chamber separated from the entry chutes by a seed baffle. Within the first or seed chamber the seeds form into a mass thereof against the first surface of the seed disk. A vacuum source is coupled to the second chamber within the housing where it communicates with the first chamber and with the seed mass contained therein through one or more rows of apertures circumferentially disposed adjacent the outer periphery of the seed disk.

Seed cells are defined by a plurality of recesses in the first surface of the seed disk. Each of the recesses is associated with a different one of the apertures in the seed disk. The flat front wall of the seed cell provides for easy entry of the seed into the cell. Each seed cell is configured to have a back wall of steeper slope than the front wall thereof. The steeply sloped back walls of the seed cells are effective in agitating and mechanically accelerating seeds from the seed mass to the speed of the seed disk so that individual seeds can enter and be retained within the seed cells by the force created by the pressure differential. At the same time the seed cells are configured so as to be larger but not substantially larger than the seeds contained therein and to have a relatively shallow depth such that the seed protrudes beyond the first surface of the seed disk. This acts to prevent doubling or accumulating excess seeds on the seed disk. The problem of excess seeds is also enhanced by the presence of the low pressure differential vacuum which tends to be only strong enough to hold a single seed within each seed cell. Each aperture is located relative to the walls of the adjoining seed cell so as to allow only one seed to be positioned directly over the aperture.

Seed release is provided for by a barrier wall within the second chamber which prevents the vacuum source from communicating with a portion of the seed disk. An opposite portion of the first chamber which is also defined by a barrier wall within the chamber serves as a seed discharge chamber such that when seeds within the seed cells on the disk enter such chamber they are released from the seed cells for discharge through a chute or opening at the bottom of the meter housing. A seed retainer brush mounted on the barrier wall within the first chamber bears against the side of the seed disk and prevents seeds from entering the seed discharge chamber.

## Brief Description of the Drawings

The foregoing and other objects, features and advantages of the invention will be apparent from the following more particular description of a preferred embodiment of the invention, as illustrated in the accompanying drawings, in which:

Fig. 1 is a perspective view of a towable implement including a plurality of planting units with vacuum seed meter arrangements constructed in accordance with the invention;

Fig. 2 is a perspective view of a portion of one of the planting units of Fig. 1 with a vacuum seed meter arrangement in accordance with the invention;

Fig. 3 is a perspective view of a portion of the vacuum seed meter arrangement of Fig. 2 showing a seed hopper in conjunction with a vacuum seed meter which is disposed in an open position in conjunction with a removable seed disk;

Fig. 3a is a lower perspective view of the seed hopper of Fig. 3 with the vacuum seed meter removed therefrom;

Fig. 4 is a left front perspective view of the vacuum seed meter of Fig. 3;

Fig. 5 is a right rear perspective view of the vacuum seed meter of Fig. 3;

Fig. 6 is a left side view of the vacuum seed meter of Fig. 3;

Fig. 7 is a right side view of the vacuum seed meter of Fig. 3;

Fig. 8 is a top view of the vacuum seed meter of Fig. 3;

Fig. 9 is a front view of the vacuum seed meter of Fig. 3 showing the meter disposed in an open position in conjunction with the seed disk which is removably mounted on the inside thereof;

Fig. 10 is a sectional view of the vacuum seed meter of Fig. 3 taken along the line 10-10 of Fig. 8;

Fig. 11 is a sectional view of the vacuum seed meter of Fig. 3 taken along the line 11-11 of Fig. 9;

Fig. 12 is a front view of a portion of the vacuum seed meter of Fig. 3 showing a seed mass therein together with individual seeds which are picked up from the seed mass and then released from the seed disk for discharge from the meter;

Fig. 13 is a sectional view of the vacuum seed meter of Fig. 3 taken along the line 13-13 of Fig. 8 and showing a seed mass therein in conjunction with the seed disk;

Fig. 14 is a sectional view of the vacuum seed meter of Fig. 3 taken along the line 14-14 of Fig. 12;

Fig. 15 is a sectional view of the portion of the vacuum seed meter shown in Fig. 12 taken along the line 15-15 thereof;

Fig. 16 is a sectional view of the portion of the vacuum seed meter shown in Fig. 12 taken along the line 16-16 thereof;

Fig. 17 is a plan view of a portion of the outer periphery of the seed disk showing three of the seed cells therein;

Fig. 18 is a sectional view of part of the portion of the outer periphery of the seed disk of Fig. 17 taken along the line 18-18 thereof;

Fig. 19 is a sectional view of the portion of the outer periphery of the seed disk of Fig. 17 taken the line 19-19 thereof;

Fig. 20 is a sectional view like that of Fig. 18 but with a plurality of seeds in the region of the seed cell;

Fig. 21 is a sectional view like that of Fig. 19 but with a plurality of seeds in the region of the seed cell;

Fig. 22 is a sectional view like that of Fig. 18 but with a single seed within the seed cell; and

Fig. 23 is a plan view of an alternative arrangement of the seed disk.

### Detailed Description

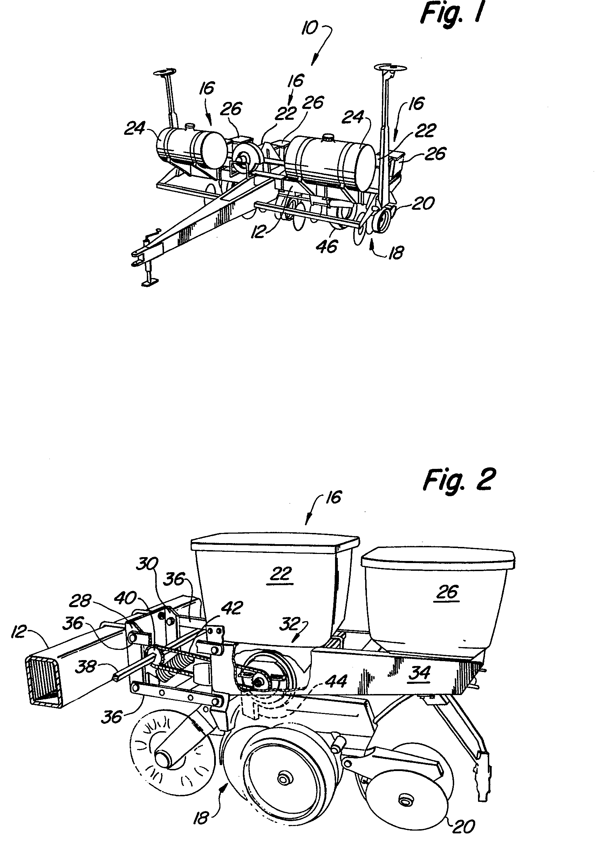

Fig. 1 depicts a planting implement 10 including a main frame 12 which is supported by a plurality of wheels 46 and is adapted for towing in a forward direction by a tractor. Attached to the main frame 12 are a plurality of different planting units 16 mounted in generally parallel, side-by-side relationship across the length thereof.

As described hereafter in connection with Fig. 2 each of the planting units 16 includes an opener 18, closing wheels 20, a vacuum seed meter (not shown in Fig. 1) and a seed hopper 22. As the tractor advances the main frame 12 over the ground, the opener 18 of each of the planting units 16 opens a furrow in the ground. As described hereafter, seeds from each of the seed hoppers 22 flow into an associated seed meter from which individual seeds are dispensed into the furrow at a controlled rate. The closing wheels 20 which trail both the seed meter and the opener 18 close the furrow onto and over the seeds dispensed by the seed meter.

In addition to the planting units 16, a plurality of fertilizer hoppers 24 are mounted across the length of the main frame 12. The fertilizer hoppers 24 which are capable of containing fertilizer are provided with conventional apparatus for dispensing controlled amounts of the fertilizer as seed planting is performed by the planting units 16. Mounted at the back of the planting units 16 are a plurality of pesticide hoppers 26. The pesticide hoppers 26 which are capable of containing insecticide are provided with conventional apparatus for dispensing controlled amounts of insecticide where desired in conjunction with the planting of seeds by the planting units 16.

Fig. 2 depicts one of the planting units 16. The planting unit 16 is mounted on the back of the main frame 12 by a pair of generally vertical brackets 28 and 30. The seed hopper 22 which has a vacuum seed meter 32 coupled to the bottom thereof is disposed within a frame 34. The frame 34 trails behind and is capable of undergoing up and down motion relative to the main frame 12 and the attached brackets 28 and 30 by a plurality of arms 36. Two of the arms 36 are pivotably coupled to both the bracket 28 and one side of the frame 34. The other two arms 36 are pivotally coupled to the bracket 30 and to the opposite side of the frame 34.

An elongated shaft 38 is rotatably mounted behind the main frame 12. A plurality of chain sprockets 40 are mounted at different locations along the length of the shaft 38 such that each chain sprocket 40 is disposed between the brackets 28 and 30 of a different one of the planting units 16. The chain sprocket 40 shown in Fig. 2 is coupled by a chain 42 to a second chain sprocket 43 which is mounted below the seed hopper 22 at one side of the seed meter 32. The second chain sprocket 43 is coupled to rotate a seed disk within the vacuum seed meter 32 to provide the dispensing of individual seeds from a seed discharge chute 44 at the bottom of the vacuum seed meter 32.

Referring again to Fig. 1 the arrangement shown therein includes a wheel 46 which is maintained in contact with the ground so as to roll over the ground as the planting implement 10 is advanced by the tractor. The wheel 46 is coupled to the shaft 38 at the back of the main frame 12 by an arrangement of chains and sprockets (not shown) so as to rotate the shaft 38 as the wheel 46 rotates. The shaft 38 rotates at a speed in direct proportion to the rotational speed of the wheel 46 and therefore in direct proportion to the speed at which the main frame 12 and the various planting units 16 are moving over the ground. Accordingly, the shaft 38 rotates at a speed directly related to the speed of movement of the main frame 12 over the ground. By coupling the shaft 38 to the vacuum seed meter 32 via the chain sprocket 40, the chain 42 and the second chain sprocket 43, the rate of seed discharge from the vacuum seed meter 32 is coordinated with the speed of the main frame 12. Thus, as the speed of the tractor and thereby the main frame 12 increases, the rate of seed discharge from the vacuum seed meter 32 is increased accordingly so that uniform seed spacing within the furrow is maintained. Likewise, when the speed of the main frame 12 decreases, the rate of seed discharge from the vaccum seed meter 32 decreases by a corresponding amount so as to maintain the seed spacing constant. The seed spacing is itself a variable by varying the connection between the wheel 46 and the shaft 38 so that the shaft 38 rotates at different rates relative to the wheel 46.

As shown in Fig. 2 the opener 18 is disposed in a forward location of the planting unit 16. The opener 18 opens a furrow in the ground into which the individual seeds from the vacuum seed meter 32 are discharged at the desired spacing. The closing wheels 20 which are disposed rearwardly of the planting unit 16 collapse dirt from the opposite sides of the furrow into the furrow wall and cover the seeds discharged by the vacuum seed meter 32.

In actual practice the tractor typically moves over the ground at a speed of 6 - 13 km per hour during seed planting. Seed spacing within the furrows can range from as little as *1.5cm* to as much as *40 cm* between adjacent seeds. Accordingly, the rate of seed discharge from the vacuum seed meter 32 can vary greatly from a very low discharge rate of *about* five seeds per second or less such as where the tractor is traveling *at about* *6 km* per hour and *40cm* seed spacing is required to a very high rate of *about* 200 seeds per second or greater when the tractor is traveling at a faster speed and a seed spacing of as little as *1.5cm* is required. It will therefore be appreciated that the vacuum seed meter 32 must be capable of dispensing seeds at a rate which can vary substantially. Further complicating matters is the fact that seed meters such as the vacuum seed meter 32 should be capable of handling different types of seeds of different size and surface characteristics. And, in any event, the vacuum seed meter 32 must be capable of dispensing the seeds accurately. This means that one seed and no more than one seed is planted at each desired location along the length of the furrow. The discharging of two or more seeds into the furrow at any one location, which is sometimes referred to as "doubling", is undesirable at the very least and is unacceptable for many planting operations. Conversely, the missing or skipping of a seed at any one of the desired seed locations along the length of the furrow is also undesirable. Various planting operations may allow a missed seed only very infrequently so that plant population does not vary more than a few per cent.

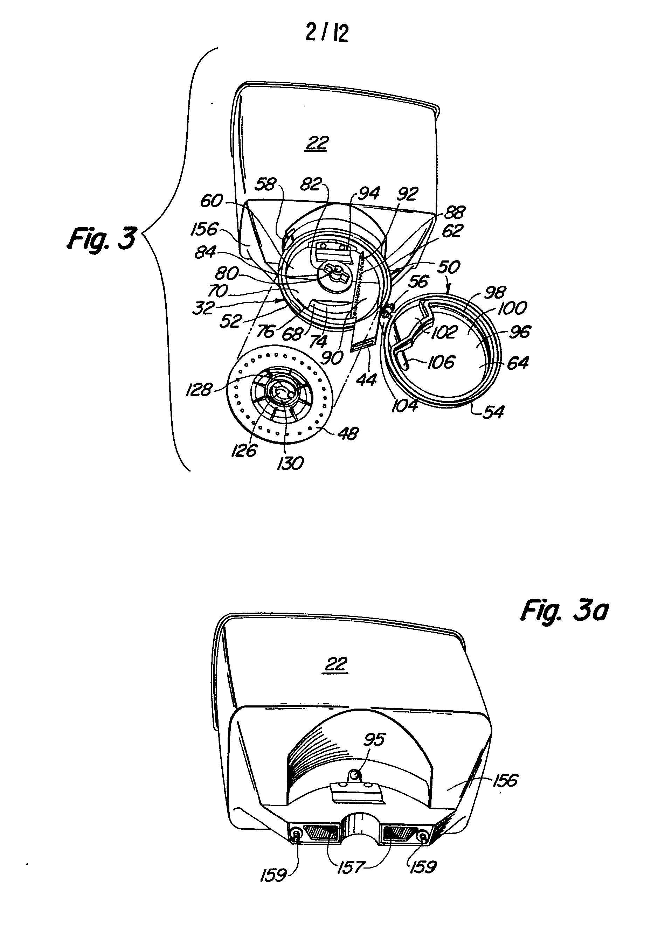

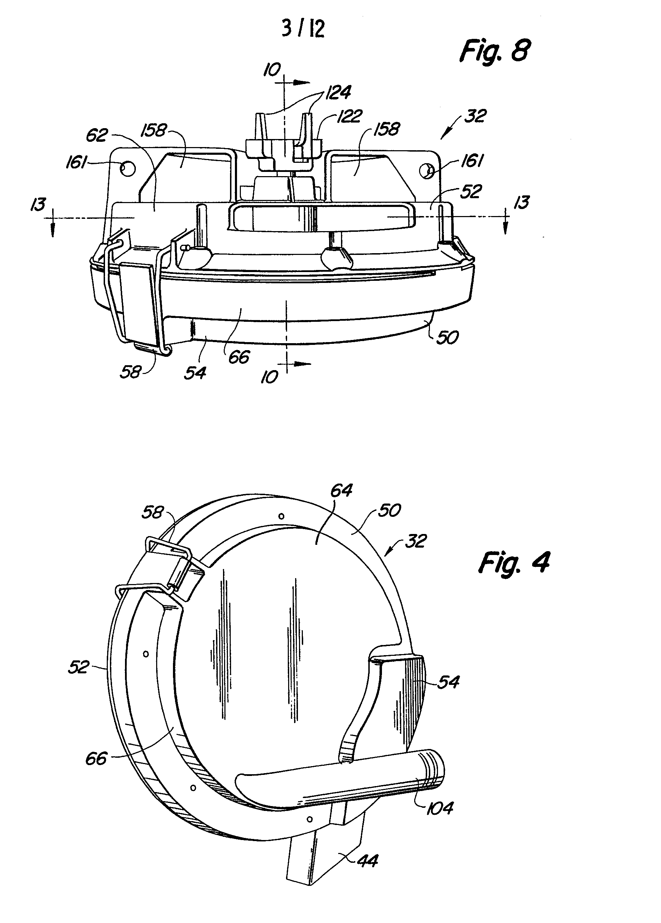

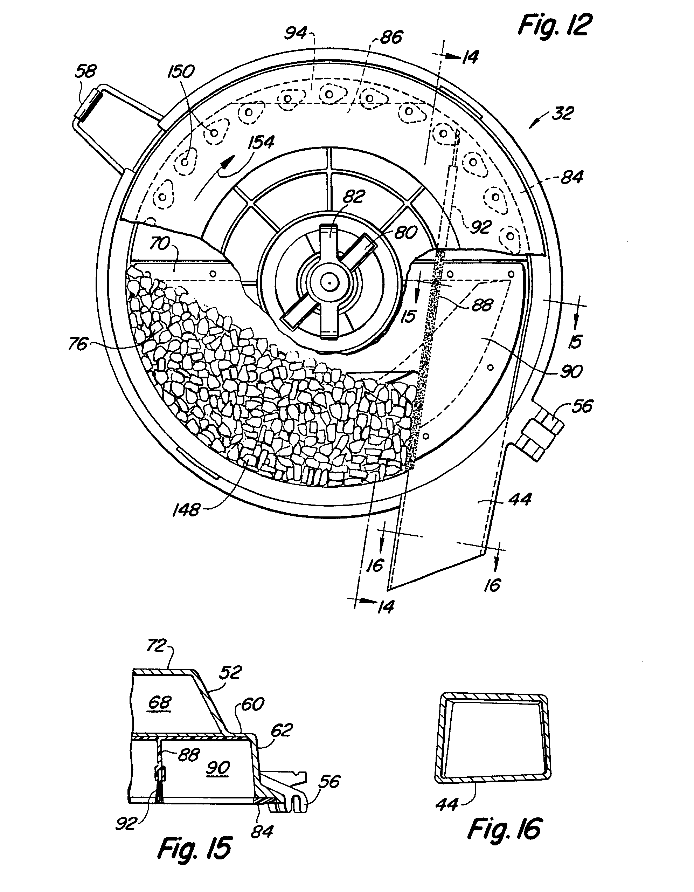

Fig. 3 depicts the seed hopper 22 in conjunction with the vacuum seed meter 32. The vacuum seed meter 32 is depicted in an opened position in conjunction with a seed disk 48 removably located within the interior of the vacuum seed meter 32. The vacuum seed meter 32 and various portions thereof is also shown in Figs. 4-16, some of which show the vacuum seed meter 32 in the opened position as in the case of Fig. 3 and some of which show the vacuum seed meter 32 in the closed position. Figs. 12-14 show the vacuum seed meter 32 with a mass of seeds therein.

The vacuum seed meter 32 has a generally cylindrical housing 50 which is comprised of a first half shell 52 and a second half shell 54. The first and second half shells 52 and 54 are of somewhat similar configuration and are coupled together by a hinge assembly 56. A clasp assembly 58 which is mounted on opposite sides of the first and second half shells 52 and 54 from the hinge assembly 56 is used to hold the half shells 52 and 54 together in a closed position.

The first half shell 52 is comprised of a generally disk-shaped back wall 60 and a generally cylindrical sidewall 62 joined to the back wall 60 at the outer periphery of the back wall 60. Likewise, the second half shell 54 is comprised of a generally disk-shaped back wall 64 and a generally cylindrical side wall 66 which is coupled to the outer periphery of the back wall 64. The first half shell 52 is mounted at the bottom of the seed hopper 22 so that seeds contained within the hopper 22 flow by gravity into a seed chute 68 at the back of the first half shell 52.

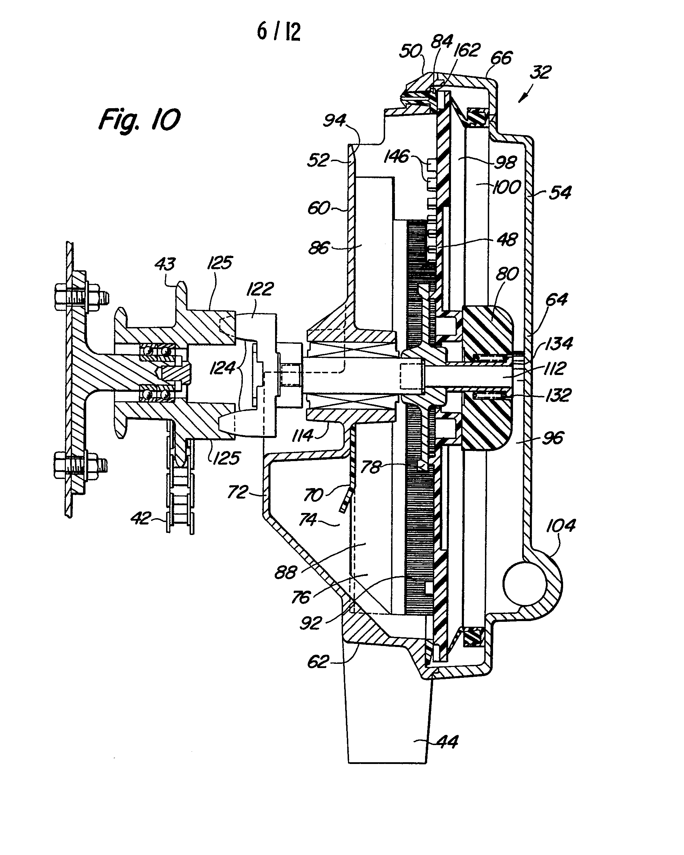

A seed baffle insert 70 which is of generally planar configuration and which is mounted on a portion of the back wall 60 forms the seed chute 68 together with an outer wall 72 (shown in Figs. 10, 11 and 14) of the first half shell 52. The seed baffle insert 70 also forms an opening 74 at the bottom of the first half shell 52 through which the seed chute 68 communicates with a seed reservoir 76 at the inside of the first half shell 52. The configuration of the seed baffle insert 70 and the opening 74 formed thereby control the seed level in the seed reservoir 76. The configuration of the seed baffle insert 70 or the size of the opening 74 or both can be changed if desired to vary the seed flow characteristics. This can be accomplished simply by replacing the seed baffle insert 70 with one of different configurations while the rest of the vacuum seed meter 32 remains the same. The seed reservoir 76 extends between the seed baffle insert 70 and the seed disk 48 when the seed disk 48 is mounted within the housing 50 comprised of the first and second half shells 52 and 54.

By action of gravity seeds within the seed hopper 22 flow downwardly from the hopper 22 into the seed chute 68 at the back of the first half shell 52. From the seed chute 68 the seeds flow through the opening 74 and into the seed reservoir 76. The resulting seed mass is shown in Fig. 12.

The seed disk 48 is releasably and rotatably mounted within the cylindrical housing 50 by being mounted on a hub assembly 78 at the center of the first half shell 52. The hub assembly 78 includes a rotatably mounted disk attaching mechanism 80 which has a handle 82. Rotation of the handle 82 locks the seed disk 48 to and unlocks the disk 48 from the hub assembly 78. ~~in a manner which is shown and described in detail in a copending application of Webber, Serial No. _____, filed _____ and commonly assigned with the present application.~~ When the seed disk 48 is mounted on the hub assembly 78, the outer periphery of the disk 48 is disposed in close proximity to a generally ring-shaped seed barrier 84 mounted on the generally cylindrical sidewall 62 of the first half shell 52. Accordingly, the seed disk 48 essentially closes off the open interior of the first half shell 52 so as to form a first or seed chamber 86 which includes the seed reservoir 76 at the bottom thereof.

A separating wall 88 extending across the inside of the first half shell 52 between opposite portions of the sidewall 62 of the first half shell 52 defines a separate seed discharge chamber 90 within the first or seed chamber 86. As described hereafter individual seeds from the seed reservoir 76 at the bottom of the first half shell 52 are picked up by the seed disk 48 where they are held in place by the effects of vacuum from a vacuum source coupled to the interior of the second half shell 54. The individual seeds remain attached to the seed disk 48 until they reach the seed discharge chamber 90 which is isolated from the vacuum within the second half shell 54. This releases the seeds from the seed disk 48, whereupon the individual seeds fall through the seed discharge chute 44 into the furrow in the ground below. The seed discharge chute 44 is coupled to the first half shell 52 so as to communicate with the interior of the first half shell 52 at the bottom of the seed discharge chamber 90. An elongated seed retainer brush 92 is mounted on the top of and extends along the length of the separating wall 88 so as to be disposed adjacent the seed disk 48. As described hereafter the seed retainer brush 92 combines with the separating wall 88 to form a substantially complete barrier between the back wall 60 and the seed disk 48 while at the same time permitting fins which may be located on the surface of the seed disk 48 to pass through such barrier.

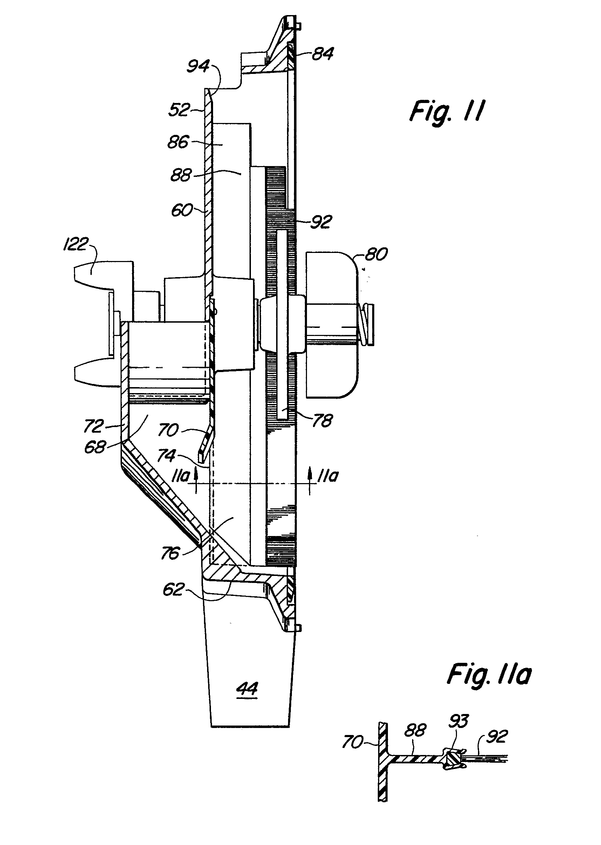

As shown in Figs. 11 and 11a the separating wall 88 may be formed integrally with the seed baffle insert 70 so that the wall 88 and the insert 70 are installed in the meter 32 as a single element. The upper edge of the separating wall 88 terminates in an open channel 93 extending along the length of the wall 88 and receiving the base of the seed retainer brush 92 therein. The open channel 93 facilitates replacement of the brush 92.

An air inlet opening 94 formed in the back wall 60 of the first half shell 52 at the top of the first half shell 52 permits air to flow into the first or seed chamber 86 at the interior of the first half shell 52 from outside of the vacuum seed meter 32. A small amount of such air flow is needed to assure atmospheric pressure in chamber 86 so that the vacuum within the second half shell 54 will hold the individual seeds in place as they are picked up by the seed disk 48.

The opening 94 also receives a clip 95 therethrough to help support the meter 32 on the hopper 22. As shown in Fig. 3a the clip 95 is mounted at the base of the hopper 22. The bottom of the hopper 22 is concave in the region just above the meter 32 to permit air flow to the opening 94 while protecting the meter 32 and the opening 94 from the elements.

The second half shell 54 has a second or vacuum chamber 96 at the interior thereof. The second or vacuum chamber 96 is defined by the back wall 64 in conjunction with a vacuum seal 98 and a vacuum seal retainer 100 extending upwardly from the back wall 64 and mounting the vacuum seal 98 thereon. The vacuum seal 98 and the vacuum seal retainer 100 are disposed adjacent and inside of the generally cylindrical sidewall 66 of the second half shell 54 around most of the perimeter of the sidewall 66. However, at a portion of the second half shell 54 adjacent the hinge assembly 56, the seal 98 and the seal retainer 100 extend across the second half shell 54 in a manner so as to define a non-vacuum chamber 102 within the second half shell 54 and adjacent the second or vacuum chamber 96. A vacuum port 104 formed in the back wall 64 of the second half shell 54 terminates in an opening 106 which communicates with the second or vacuum chamber 96 within the second half shell 54.

The vacuum port 104 is coupled to a vacuum source which in this instance comprises a centrifugal blower 107 mounted on the main frame 12 as shown in Fig. 1. A manifold 109 coupled to the inlet side of the centrifugal blower 107 is coupled to each of the vacuum seed meter 32 mounted on the planter implement 10 by lengths of flexible hose (not shown) which couple to the vacuum ports 104. This enables the low pressure of the blower 107 to be communicated through the vacuum port 104 and the opening 106 to the vacuum chamber 96.

The vacuum chamber 96 applies the low pressure to a major portion of the seed disk 48. The portion of the seed disk 48 which is not exposed to the low pressure is that portion residing between the seed discharge chamber 90 within the first half shell 52 and the non-vacuum chamber 102 within the second half shell 54. The particular configuration of the vacuum seal 98 and the vacuum seal retainer 100 prevents the reduced pressure within the vacuum chamber 96 from communicating with the non-vacuum chamber 102. The absence of the reduced air pressure of the vacuum source at the portion of the seed disk 48 adjacent the non-vacuum chamber 102 provides for release and discharge of the individual seeds on the seed disk 48 within the seed discharge chamber 90.

As seen in Fig. 4 the vacuum port 104 terminates in a hollow tube at the exterior of the second half shell 54 of the cylindrical housing 50. The vacuum port 104 is located near the bottom of the housing 50 to suck out debris and prevent accumulation of the debris in the vacuum chamber 96. This hollow tube portion of the vacuum port 104 is coupled to the vacuum source by a length of flexible tubing and the mainfold 109 as previously noted.

The hub assembly 78 which is shown in Figs. 3, 9 and 12 is shown in cross section in Fig. 10 and in some detail in Fig. 11. As best seen in Fig. 10 the hub assembly 78 includes a hub 110 of generally circular configuration mounted on a shaft 112. The shaft 112 extends through a hollow cylindrical portion 114 within the back wall 60 of the first half shell 52 where it is rotatably mounted by opposite bearing arrangements 116 and 118. The hub 110 mounts the seed disk 48 thereon.

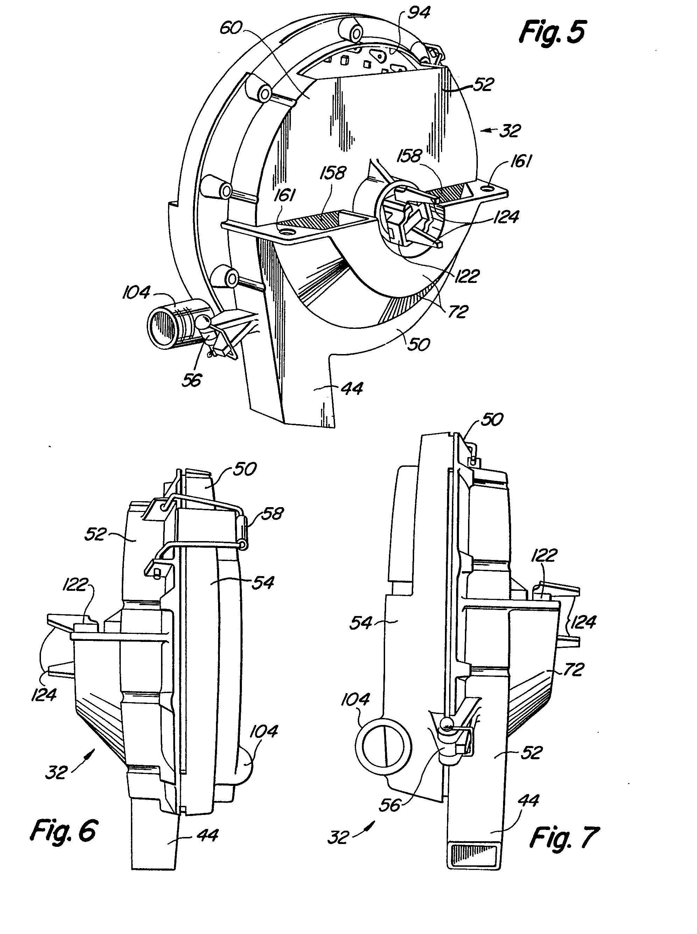

As previously noted in connection with Fig. 2, the seed disk 48 within the vacuum seed meter 32 is rotatably driven by the common shaft 38 behind the main frame 12. The chain sprocket 40 and the chain 42 couple the shaft 38 to drive the rear chain sprocket 43. The rear chain sprocket 43 is in turn coupled to the shaft 112 shown in Fig. 10 by an automatically engageable and disengageable drive coupler mechanism 122 which is shown in Figs. 5-8 and 11 as well as in Fig. 10. ~~and which is shown and described in greater detail in a copending application of Swales et al, Serial No. _____, filed _____ and commonly assigned with the present application. As described in said copending application Serial No. _____,~~ the drive coupler mechanism 122 includes opposite lugs 124 which are commonly mounted so as to be rotatable through approximately 180° against spring resistance. This allows the rear chain sprocket 43 to be coupled to and uncoupled from the lugs 124 via lugs 125 thereon without manual assistance from the operator. With lugs 125 on the rear chain sprocket 43 engaging the lugs 124, the shaft 112 shown in Fig. 10 is rotated so as to rotatably drive the seed disk 48 via the hub 110.

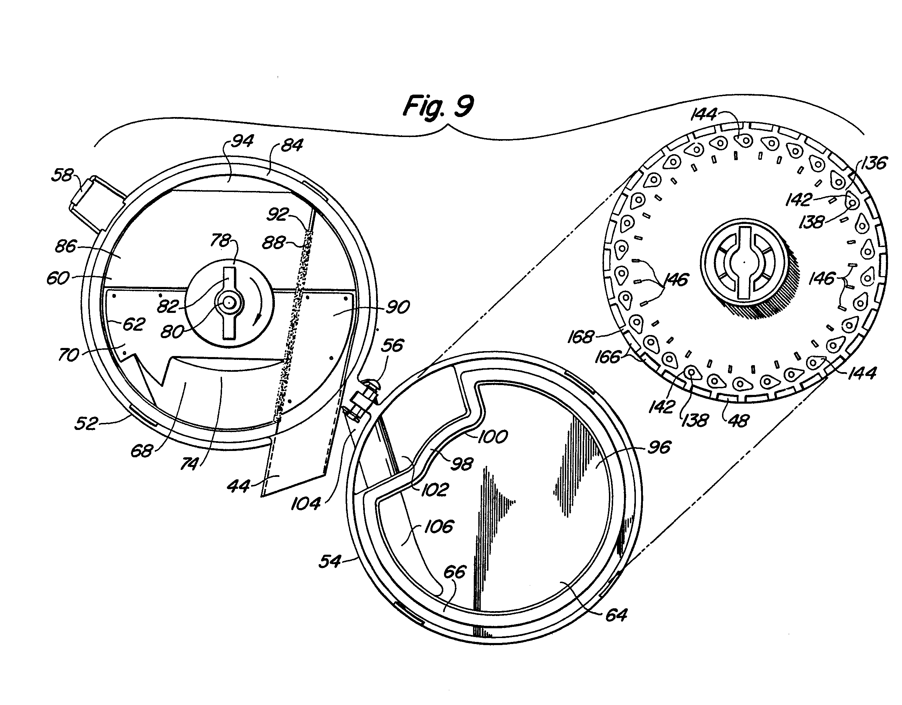

As previously noted, the hub assembly 78 includes the disk attaching mechanism 80 and the handle 82. As seen in Fig. 3 the center of the seed disk 48 is provided with an elongated slot 126 therein disposed between an opposite pair of semicircular ramps 128 and 130 of gradually increasing height. As seen in Fig. 3 as well as in Figs. 9 and 12 the handle 82 is of elongated configuration and of appropriate size so as to pass through the elongated slot 126 of the seed disk 48 as the seed disk 48 is mounted on the hub assembly 78. When the seed disk 48 is so mounted, rotation of the handle 82 causes the handle to ride up on the ramps 128 and 130 against the resistance of a spring 132 shown in Fig. 10. The spring 132 extends between the hollow interior of the handle 82 and a keeper 134 mounted on the end of the shaft 112. When the handle 82 is rotated to the highest portions of the ramps 128 and 130, it is retained in this position within detents so as to hold the seed disk 48 locked on the hub 110. ~~The seed disk attaching mechanism 80 is shown and described in greater detail in a copending application of Webber, Serial No. _____, filed _____ and commonly assigned with the present application.~~

When the seed disk 48 is mounted on the hub 110 in the manner just described, the second half shell 54 must be closed over the seed disk 48 and the first half shell 52 before the vacuum seed meter 32 can be operated. The hinge assembly 56 permits rotation of the second half shell 54 relative to the first half shell 52 to close the second half shell 54 over the seed disk 48 and the first half shell 52. The second half shell 54 is then latched in the closed position by securing the clasp assembly 58. It is desirable that the first and second half shells 52 and 54 be flexibly hinged so that they can fit together in sealing relation in the face of such things as manufacturing tolerances. The hinge assembly 56 permits such flexibility through use of a spring-loaded hinge pin. ~~The hinge~~

~~assembly 56 is shown and described in greater detail in a copending application of Ankum et al, Serial No. _____, filed _____ and commonly assigned with the present application.~~

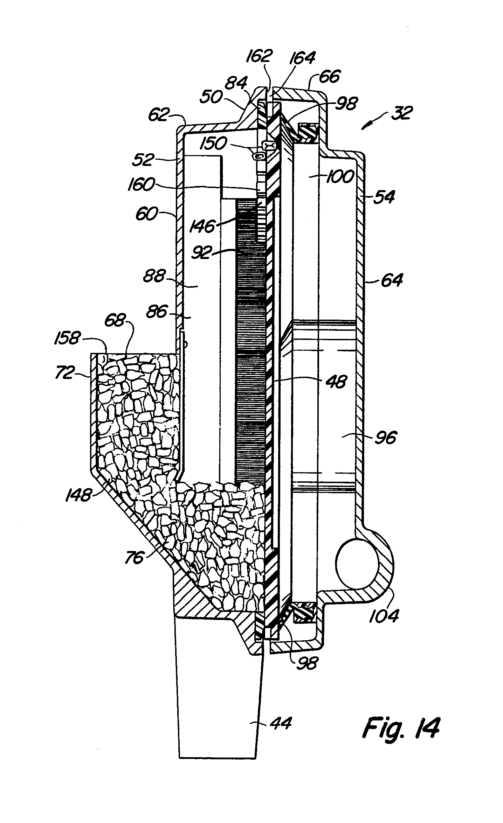

As previously discussed in connection with Fig. 3 the vacuum seal 98 is mounted on the vacuum seal retainer 100 within the second half shell 54. The vacuum seal 98 is generally V-shaped in cross section as shown in Figs. 10 and 14 and bears against the outer periphery of the seed disk to seal the seed disk 48 to the vacuum chamber 96 formed within the second half shell 54. The portion of the vacuum seal 98 which resides against the seed disk 48 forms a lip that is drawn against the seed disk 48 by the vacuum, enabling the seal 98 to function as a vacuum cutoff. ~~The vacuum seal 98 is shown and described in greater detail in a copending application of Wobber et al, Serial No. _____, filed _____ and commonly assigned with the present application.~~

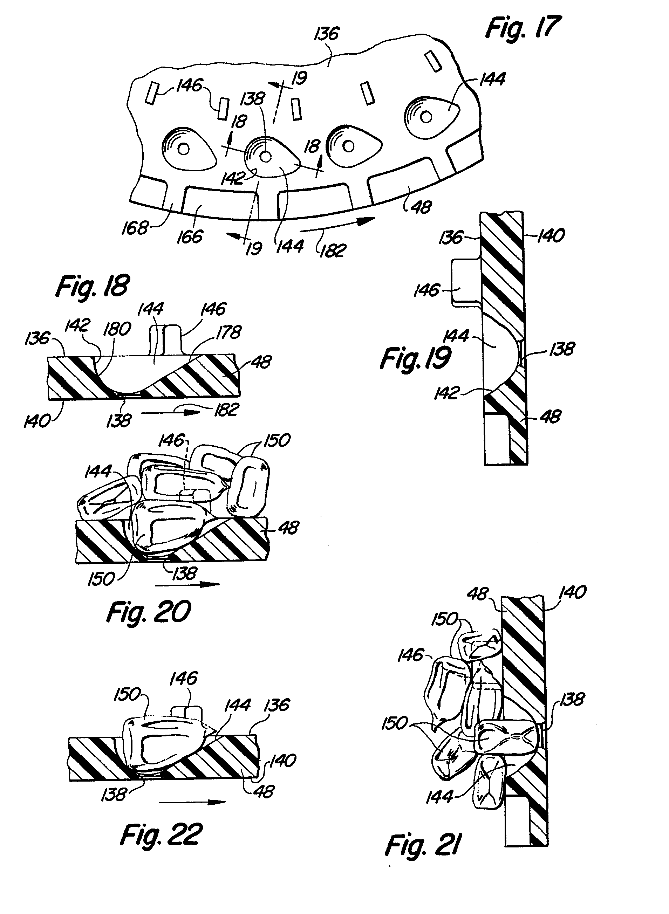

Fig. 9 depicts a first side 136 of the seed disk 48 which faces the seed chamber 86 formed by the inside of the first half shell 52 in conjunction with the seed disk 48. As seen in Fig. 9 the seed disk 48 has a circumferential row of apertures 138 arranged adjacent the outer periphery of the disk 48. Each of the apertures 138 extends through the entire thickness of the seed disk 48 between the first side 136 and an opposite second side 140 of the seed disk 48. Extending into the seed disk 48 from the first side 136 thereof are a plurality of recesses 142. Each of the recesses 142 is associated with a different one of the apertures 138 such that the aperture 138 is located at the bottom of the recess 142. Each recess 142 in combination with the associated aperture 138 forms a different seed cell 144 in the seed disk 48. The various seed cells 144 in the seed disk 48 which are described in detail hereafter in connection with Figs. 18-22 are operative in conjunction with the vacuum to agitate, mechanically accelerate, position and retain seeds from a mass of seeds located in the seed reservoir 76 as the seed disk 48 is rotated through the seed reservoir 76.

As also shown in Fig. 9 the first side 136 of the seed disk 48 may be provided with a circumferential row of fins 146. Each of the fins 146 is located radially inwardly from and adjacent a different one of the seed cells 144. The fins 146 are shown and described in greater detail hereafter in connection with Figs. 18-22. While the seed cells 144 provide considerable agitation of the seeds as the seed disk 48 is rotated through a mass of seeds in the seed reservoir 76, the fins 146 are provided on the seed disk 48 in the present example to provide additional agitation. Generally the fewer seed cells 144 there are on the seed disk 48 the less is the agitation provided thereby and therefore the greater the likelihood that additional items such as the fins 146 may be needed to provide the necessary agitation. Also, if a large range of operating speeds is required, fins are advantageous since they permit the use of relatively shallow seed cells at low speeds without the problem of multiple seeds.

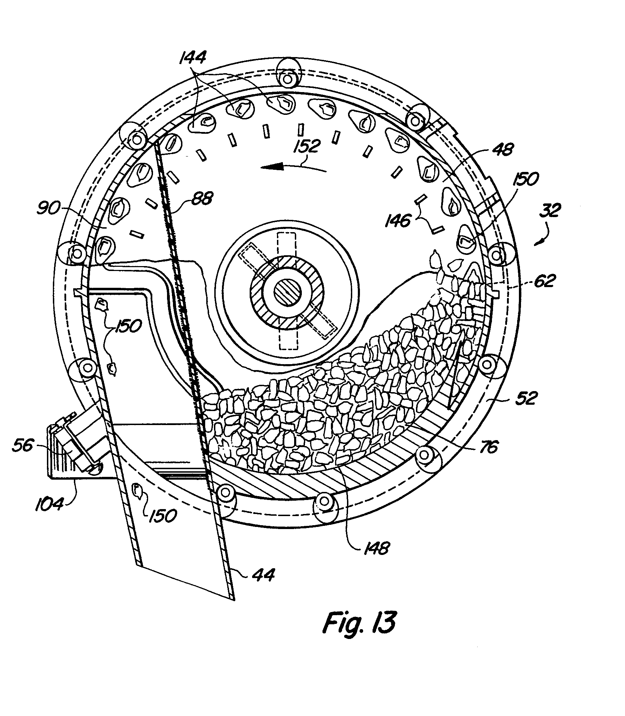

Figs. 12-14 depict a mass of seeds within the seed reservoir 76 in the vacuum seed meter 32. Fig. 13 depicts such a seed mass 148 in conjunction with the first side 136 of the seed disk 40. Fig. 12 is a view in the opposite direction from that of Fig. 13 which depicts the seed mass 148 and a plurality of individual seeds 150 therefrom as they are picked up by the seed cells 144 of the seed disk 48 and carried over to the seed discharge chamber 90 for release from the seed disk 48. Fig. 14 is a cross-sectional view through the vacuum seed meter 32 showing the seed mass 148 as it resides within the seed reservoir 76.

As previously noted in connection with Figs. 10 and 14 the vacuum seal 98 which resides against the second side 140 of the seed disk 48 exposes the second side 140 of the seed disk 48 to the full effects of the vacuum from the vacuum source. The seed disk 48 is essentially sealed to the hub 110 so that the vacuum is confined to communicating with the first side 136 of the seed disk 48 substantially exclusively through the apertures 138 in the seed disk 48. This enables the individual seeds 150 to be held within the seed cells 144 in the first side 136 of the seed disk 48 as the seeds 150 are agitated and then mechanically accelerated by the seed cells 144 as they pass through the seed mass 148. Each of the seed cells 144 is configured and dimensioned so as to pick and retain therein one and only one seed 150 as the seed cell 144 moves upwardly out of the seed mass 148. The single seed 150 is retained by pressure differential within the seed cell 144 until the seed disk 48 has rotated far enough for the seed cell 144 to enter the seed discharge chamber 90. At that point the effects of the vacuum communicating through the associated aperture 138 and holding the seed 150 within the seed cell 144 are terminated and the seed 150 is released so as to fall out of the seed cell 144 under the urging of gravity. This is illustrated in Figs. 12 and 13.

Each of the apertures 138 is chamfered on the second or vacuum side 140 of the seed disk 48. The increasing diameter of each aperture 138 between the bottom of the seed cell end thereof and the opposite end at the side 140 of the seed disk 48 permits debris such as seed chips, broken seeds and dirt within the seed chamber 86 to be pulled through the aperture 138 and out of the seed meter 32 via the vacuum port 104.

In Fig. 13 the seed disk 48 is rotating in a counterclockwise direction as represented by an arrow 152. As the individual seed cells 144 adjacent the outer periphery of the seed disk 48 move through the seed mass 148, the seed cells 144 agitate the individual seeds 150 with each of the seed cells 144 thereafter mechanically accelerating a small group of the seeds 150 through the seed mass 148. This results in at least one of the seeds 150 being picked up and retained within the seed cell 144 by vacuum as the seed cell 144 moves through the seed mass 148. Additional seeds may become temporarily attached to the seed disk 48 in the region of the seed cell 144 as the cell 144 is moved through the seed mass 148. However as the seed cell 144 reaches and then rises above the surface of the seed mass 148, such additional seeds fall away from the seed cell 144 and back onto the seed mass 144 so that only a single seed 150 remains within the seed cell 144. This is due in part to the shape and size of the seed cells 144 which is discussed hereafter in connection with Figs. 18-22 and which is configured so that only one seed at a time may reside over the aperture 138 at the bottom of the cell 144. It is also due to the fact that the vacuum which is communicated to the interior of the vacuum seed meter 32 is relatively low and involves a relatively small pressure differential. Thus, the vacuum need only be strong enough to hold a single seed 150 within each seed cell 144 as the seed cell 144 moves out of the seed mass 148 and eventually into the seed discharge chamber 90. The vacuum is not so strong that two or more of the seeds 150 are held within a given seed cell 144. The use of a relatively low level of vacuum is made possible largely by the design of the seed cells 144. The individual seed cells 144 are configured and dimensioned so as to agitate and mechanically accelerate the seeds and then capture a seed 150 therein without the need for a strong vacuum. In the present example the vacuum source need provide a pressure differential of no greater than about 2.0 KPa within the vacuum chamber 96 at the second side 140 of the seed disk 48.

Fig. 13 shows the manner in which the seed cells 144 of the seed disk 48 move through the seed mass 148, capture a single seed 150 within each seed cell 144 and thereafter carry the seed to the seed discharge chamber 90. After each of the seed cells 144 passes through the opening at the top of the separating wall 88 and moves opposite the chamber 102, the force of the vacuum which is communicated to the seed 150 via the aperture 138 at the bottom of the seed cell 144 is terminated so as to release the seed 150 from the seed cell 144. This allows the seed 150 to fall from the seed cell 144 under the force of gravity. The released seed 150 falls downwardly through the seed discharge chute 44 into the furrow in the ground below. Fig. 12 which is a view in the opposite direction from that of Fig. 13 also shows the path of the individual seeds 150 as they are picked up from the seed mass 148 and carried over to the seed discharge chamber 90 for release from the seed cells 144 within the seed disk 48. In the view of Fig. 12 the seed disk 48 which is not shown therein rotates in a clockwise direction as represented by an arrow 154. The arrow 154 also represents the direction of rotation of the hub assembly 78 on which the seed disk 48 is mounted.

Referring again to Fig. 3a it will be seen that the seed hopper 22 has a bottom portion 156 which converges down onto the first half shell 52 of the vacuum seed meter 32. Seeds within the seed hopper 22 flow into the converging bottom portion 156 where they pass through a pair of openings 157 at the bottom portion 156 and then through a pair of mating apertures 158 in the housing 50 of the seed meter 32. The apertures 158 are in the top of the outer wall 72 as seen in Figs. 5, 8 and 14. The apertures 158 define the top of the seed chute 68. The openings 157 provide good seed flow and hopper emptying, and with the configuration of the mating apertures 158 in the seed meter provide a convenient location for the meter drive without need for elaborate drive seals.

The seed meter 32 is easily coupled to aid removal from the bottom portion 156 of the seed hopper 22. As shown in Fig. 3a a pair of threaded shafts 159 on the outside of the bottom portion 156 adjacent the openings 157 extend through openings 161 (shown in Fig. 8) in the first half shell 52 and receive threaded nuts thereon to mount the seed meter 32 on the hopper 22. As previously noted the clip 95 is received in the opening 94 at the top of the seed chamber 86 to help support the seed meter 32 on the hopper 22.

As the seeds flow through the apertures 158 and down into the seed inlet chute 68 they converge into a single mass which flows through the opening 74 and into the seed reservoir 76 formed by the bottom of the first or seed chamber 86 on the inside of the first half shell 52. The configuration of the seed inlet chute 68 at the very center thereof between the apertures 158 is shown in Fig. 10. As shown in Fig. 10 the seed baffle insert 70 is mounted on the inside of the lower extremity of the back wall 60 of the first half shell 52 and defines the opening 74 through which the seeds flow into the seed reservoir 76.

As previously noted, the seed discharge chamber 90 is separated from the first or seed chamber 86 within the first half shell 52 by the separating wall 88 together with the seed retainer brush 92. As shown in Figs. 10, 11 and 14 the seed retainer brush 92 extends from the top of the separating wall 88 into contact with the first side 136 of the seed disk 48 to complete the seed barrier. The seed retainer brush 92 prevents seeds from the seed mass 148 from spilling into the seed discharge chamber 90. The upper end of the seed retainer brush 92 has a notch 160 therein along a small portion thereof. The notch 160 within the seed retainer brush 92 forms a small space between the brush 92 and the first side 136 of the seed disk 48 as best shown in Fig. 14. This small space prevents interference with the seeds 150 by the brush 92 as the seeds 150 within the seed cell 144 are moved past the seed retainer brush 92 into the seed discharge chamber 90. At the same time the seed retainer brush 92 is sufficiently flexible so as to readily pass the fins 146 thereby in the event the fins 146 are higher than the space formed by the notch 160.

It was previously noted that the upper edge of the generally cylindrical sidewall 62 of the first half shell 52 has a cleanout and seed sealing member in the form of the barrier 84 mounted thereon. As shown in Figs. 10 and 14 the barrier 84 is disposed adjacent and forms a small space 162 with the first side 136 of the seed disk 48. The barrier 84 ~~which is shown and described in greater detail in a copending application of Olson, Serial No. _____, filed _____ and commonly assigned with the~~

present application, slopes slightly away from the first side 136 of the seed disk 48 in a radially outward direction to encourage seed chips, broken seeds, dirt and other debris which may collect within the first or seed chamber 86 to exit from the housing 50. Debris which passes through the space 162 subsequently passes through slots 164 formed between the mating first and second half shells 52 and 54. Outward expulsion of the debris through the space 162 is encouraged by a succession of cavities and radial ribs at the outer edge of the seed disk 48. As shown in Fig. 9 the outer edge of the first side 136 of the seed disk 48 is provided with a succession of cavities 166 disposed between and forming ribs 168 therebetween.

The seed cells 144 in the first side 136 of the seed disk 48 are shown in greater detail in Figs. 17-22 together with the fins 146. Fig. 17 depicts a portion of the outer periphery of the seed disk 48 including three of the seed cells 144 and three of the fins 146. The outer edge of the seed disk 48 is provided with an alternating succession of the cavities 166 and the radial ribs 168 as previously noted. Figs. 18 and 19 comprise two different sectional views of one of the seed cells 144 of Fig. 17. As shown in Fig. 18 the seed cell 144 has a front wall 178 which has a given slope profile as it descends from the first surface 136 of the seed disk 48 to the bottom of the recess 142 adjacent the aperture 138. The seed cell 144 has a rear wall 180 opposite the front wall 78 which has a slope profile between the first side 136 and the aperture 138 that is considerably greater than the slope profile of the front wall 178. It has been found that by making the rear wall 180 considerably steeper than the front wall 178, the seed cells 144 provide adequate agitation and mechanical acceleration of the seeds without the need for additional complex devices to enhance these actions. The fins 146 comprise a relatively simple and economical addition which enhances the agitation of the seeds and which may not be needed for many applications. The seed disk 48 moves in a direction shown by arrows 182 in Figs.

17 and 18.

It will be observed from Fig. 17 that the seed cells 144 are generally teardrop-shaped in outline. Consequently, the cross-sectional shape thereof in a direction normal to the sectional view of Fig. 18 is relatively symmetrical as shown in Fig. 19.

It has already been noted that the seed cells 144 have been found to provide adequate agitation and mechanical acceleration of seeds from the seed mass 148, particularly when aided by the presence of the fins 146. The shape and size of the seed cells 144 also plays an important role in eliminating all but one seed 150 from the cell 144 and thereafter holding that single seed within the cell using a low pressure differential vacuum. Figs. 20 and 21 are sectional views similar to the view of Figs. 18 and 19 respectively except that they show the seed cell 144 as it moves through the seed mass 148 and is surrounded by a plurality of the seeds 150. As shown in Fig. 20 the length of the seed cell 144 is great enough to ensure that one of the seeds 150 is captured therein. At the same time, the length is small enough so that other seeds cannot also reside within the seed cell 144. As shown in Fig. 21 the width of the seed cell 144 is adequate to accommodate a single seed 150 but not so great that other seeds can also be accommodated within the seed cell 144. It has been found that by making the width relatively small, the chances of seed doubling are greatly reduced. The positioning of the aperture 138 relative to the rear wall of the cell is also important in minimizing the chances of seed doubling. While the depth of the seed cell 144 is great enough to provide the necessary agitation, mechanical acceleration and eventual seed capture, the depth is not so great as to permit other seeds to reside on top of a single seed within the seed cell 144, particularly when the vacuum is communicated through the aperture 138 to the outside of the seed cell 144. As a result, as the seed cell 144 emerges from the seed mass 148 a single seed 150 resides within the seed cell 144 as shown in Fig. 22. The depth of the seed cell 144 is preferably not substantially greater than about half the diameter of the seed 150.

A seed meter is desirably capable of use with a variety of different seed types. For example, a meter should be capable of use with corn, cotton, sorghum, sugar beets, soy beans and sunflower as a minimum, even though not all farms will plant all of these seeds or even the majority of them. Unfortunately different types of seeds vary considerably, not only in size but also in terms of shape and surface texture.

The vacuum seed meter 32 in accordance with the invention is capable of use with many different types of seeds. The only modification required is that the seed disk 48 be changed. This is easily accomplished in the field or elsewhere simply by unlocking the clasp assembly 58, opening the housing 50 and rotating the handle 82 to unlock and permit replacement of the seed disk 48. The seed disks 48 have seed cells 144 which are configured for use with a particular type or types of seed. This insures adequate agitation, mechanical acceleration and capture and retention for each particular type of seeds. The basic design of the seed disk shown in Fig. 9 is suitable for use with corn.

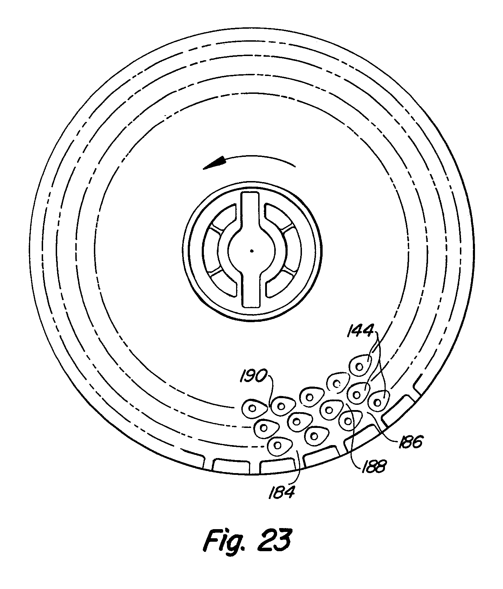

The seed disk 48 shown in Figs. 3 and 9 has a single circumferential row of seed cells 144 with adjoining apertures 138. However, it is possible to use a seed disk having more than one circumferential row of seed cells as shown, for example, by a seed disk 184 in Fig. 23. The seed disk 184 shown in Fig. 23 has three different circumferential rows 186, 188 and 190 of the seed cells 144, but in most other respects is similar to the seed disk 48. The circumferential rows 186, 188 and 190 are generally concentrically arranged within the seed disk 184. The fins 146 in the seed disk 48 are not present in the seed disk 184 although they could be if desired. The presence of the three circumferential rows 186, 188 and 190 of the seed cells 144 has been found to provide adequate seed agitation and mechanical acceleration without the need for fins. The locations of the seed cells 144 within the circumferential rows 186, 188 and 190 thereof are staggered so that a continuous succession of the seed cells 144 enters the seed discharge chamber 90. Accordingly, a seed is discharged from the circumferential row 186 followed by the discharge of a seed from the circumferential row 188 and then the discharge of a seed from the circumferential row 190. In addition the seed cells 144 in the various different rows 186, 188 and 190 are carefully positioned so that the seeds are planted with substantially equal spacing therebetween.

It will be noted that in both the case of the single seed cell row disk 48 and the three seed cell row disk 184, the seed cells are disposed adjacent the outer edge of the disk. This encourages agitation and mechanical acceleration of the seeds. If the row or rows of seed cells are located relatively close to the center of the disk, then agitation and mechanical acceleration are significantly reduced. On the other hand seed cells cannot be placed too close to the outer edge of the disk because of the danger of trapping seeds between the seeds captured in the seed cells and the inner wall of the meter housing.

CLAIMS

1. A seed meter comprising a housing (50) divided into a seed chamber (76) and a vacuum chamber (96) by a rotatable disk (48) with a circumferential row of through apertures (138) for picking up seeds under the influence of reduced pressure in the vacuum chamber (96), a sector of the disk being partitioned off both from the vacuum chamber and from the seed chamber so as to allow seeds to drop off the disk to a discharge chute (44), characterised in that, on the side of the disk (48) facing the seed chamber, each through aperture (138) opens into a recess (142) forming a seed cell and promoting the retention of single seeds at each aperture under the influence of the reduced pressure in the vacuum chamber.

2. A seed meter according to claim 1, characterised in that each recess (142) has a leading wall (178) which slopes into the aperture (138) and a trailing wall (180) which slopes back out again more steeply than the leading wall.

3. A seed meter according to claim 2, characterised in that the aperture (138) is closer to the edge of the recess (142) defined by the trailing wall (180) than to the edge of the recess defined by the leading wall (178).

4. A seed meter according to claim 1, 2 or 3, characterised in that each recess (142) has a teardrop shape in outline with a length dimension extending circumferentially and a width dimension extending radially of the disk (48).

5. A seed meter according to claim 4, characterised in that the width dimension is not substantially greater than the width of the seeds to be metered.

6. A seed meter according to claim 1 to 5, characterised in that each recess (142) has a depth less than the thickness of the seeds to be metered but not substantially exceeding half the said thickness.

7.   A seed according to any of claims 1 to 6, characterised by a circumferential row of agitating fins (146) on the seed chamber side of the disk (48).

8.   A seed according to claim 7, characterised in that the fins (146) are in one-to-one correspondence with the recesses (142) and have the same circumferential positions relative to their respective recesses.

9.   A seed according to any of claims 1 to 6, characterised in that there are three concentric rows of the apertures (138) and their recesses (142).

10.   A seed according to any of claims 1 to 9, characterised in that the apertures (138) flare out from the recesses (142) to the vacuum chamber side of the disk (48).

11.   A seed according to any of claims 1 to 10, characterised in that the pressure differential across the disk (48) is not more than about 2 kPa.

12.   A seed according to any of claims 1 to 11, characterised in that the seed chamber (76) is partitioned from the sector whereat the seeds drop off the disk (48) by a brush (92) which wipes against the face of the disk.

13. A seed meter comprising a housing having a hollow interior; a seed disk rotatably mounted within the housing and dividing the hollow interior of the housing into first and second chambers on opposite sides of the seed disk, the seed disk having at least one row of apertures therein extending circumferentially about the disk; a seed inlet coupled to the first chamber; a vacuum source coupled to the second chamber provide a pressure differential of not more than about 2.0 kPa in the second chamber; and means defining a seed discharge chamber within the first chamber, the seed discharge chamber being generally sealed from the vacuum source.

14. A seed meter comprising a first half-shell of generally circular configuration and having a generally disk-shaped back wall and an adjoining side wall of generally cylindrical configuration; a second half-shell of generally circular configuration adapted to close over the first half-shell and form a housing therewith, the second half-shell having a generally disk-shaped back wall and an adjoining side wall of generally cylindrical configuration; a hub assembly mounted within the first half-shell substantially at the centre of the back wall thereof, the hub assembly being adapted to rotatbaly mount a seed disk thereon; a seed inlet chute formed on the outside of the back wall of the first half-shell and terminating at an opening in the back wall adjacent the side wal of the first half-shell; a separating wall mounted on the back wall of the first half-shell adjacent the hub assembly, the separating wall extending between two different portions of the side wall of the first half-shell and defining a seed discharge chamber with a part of the side wall between the two different portions; a seed discharge chute of elongated, hollow configuration joined to the side wall of the first half-shell at an aperture in the side wall and communicating with the seed discharge chamber; a vacuum port formed on the outside of the back wall of the second half-shell and terminating in a opening in the back wall of the second half-shell; and a seal mounted within the second half-shell and adapted to seal against a seed disk, a portion of the seal extending across the back wall of the second half-shell so as to separate a portion of the second half-sheel; disposed  opposite the seed discharge chamber from the remainder  of the second half-shell including the opening in the back wall at which the vacuum port terminates when the second half-shell is closed over the first half-shell.

15. A seed meter according to claim 14, further including a hinge having opposite portions coupled to the side walls of the first and second half-shells and a clasp mounted on the side wall of one of the first and second half-shells opposite the hinge.

16. A seed meter according to claim 14, further including a brush extending along a substantial portion of the length of the separating wall opposite the back wall of the first half-shell.

17. A seed meter according to claim 14, further including an air inlet opening in the back wall and an adjoining portion of the side wall of the first half-shell opposite the opening in the back wall at which the seed input chute terminates.

18. A seed meter in which a seed disk is rotatably mounted within a housing having a chamber therein at one side of the seed disk adapted to contain a quantity of seeds. characterised by a seed retainer brush of elongated configuration extending across the chamber and having a side extending along the length thereof in contact with the one side of the seed disk, the seed retainer brush acting to prevent seeds in the chamber from spilling into a second chamber defined in part by the seed retainer brush.

19. A seed meter according to claim 18, further including a divider wall of elongated configuration extending across the chamber and mounting the seed retainer brush along a top edge thereof opposite the housing.

20. A seed meter according to claim 19, wherein the divider wall has an open channel at the top edge thereof for releasably receiving the seed retainer brush.

21. A seed meter according to claim 19, further including a seed

0140701

baffle retainer mounted within the chamber to control the flow of seeds into the chamber, and wherein the divider wall has a portion thereof along and coupled to the seed baffle retainer.

22. A seed meter in which a seed disk is rotatably mounted within a housing having a chamber therein at one side of the seed disk adapted to receive seeds therein at a rear portion thereof opposite the seed disk, characterised by a seed baffle retainer mounted within the housing, the seed baffle retainer being disposed between the seed disk and the rear portion of the housing and forming an opening with the rear portion of the housing which controls the flow of seeds received at the rear portion of the housing into a region of the housing adjacent the seed disk.

23. A planting arrangement comprising the combination of a seed hopper having a converging bottom portion thereof which terminates in a pair of seed discharge apertures disposed in spaced-apart relation, and a seed meter having a housing, a seed disk rotatably mounted within the housing and coupled to a driven coupling on the outside of the housing, the housing having a pair of seed receiving apertures therein disposed on opposite sides of the driven coupling, and means for mounting the seed meter on the converging bottom portion of the seed hopper so that each of the seed receiving apertures in the housing is disposed adjacent a different one of the pair of seed discharge apertures in the converging bottom portion of the seed hopper.

24. An arrangement according to claim 23, wherein the housing of the seed meter has an air inlet at a top portion thereof above the driven coupling and the pair of seed receiving apertures, and the converging bottom portion of the seed hopper has a cavity therein in which the seed meter is received, the cavity having an upper portion extending over the top portion of the housing of the seed meter and partially covering the air inlet.

25. An arrangement according to claim 24, further including a clip mounted on the converging bottom portion of the seed hopper within the cavity, the clip being adapted to engage the air inlet in the housing of the seed meter to aid in mounting the seed meter on the converging bottom portion of the seed hopper.

**Fig. 1**

**Fig. 2**

0140701

2/12

Fig. 3

22

Fig. 3a

22

95

156

159    157    159

Fig. 8

Fig. 4

Fig. 5

Fig. 6

Fig. 7

4 / 12

0140701

Fig. 9

**Fig. 10**

0140701

*Fig. 11*

94
52
86
88
60
122
92
80
72
70
68
74
78
62
76

11a    11a

44

*Fig. 11a*

70    88    93    92

0140701

Fig. 12

Fig. 15

Fig. 16

Fig. 13

Fig. 14

0140701

11 / 12

Fig. 17

Fig. 18

Fig. 19

Fig. 20

Fig. 21

Fig. 22

12 / 12

*Fig. 23*